# EUROPEAN PATENT SPECIFICATION

(11) **EP 3 616 286 B1**
(45) Date of publication and mention of the grant of the patent: **04.11.2026**
(21) Application number: 18725579.9
(22) Date of filing: 27.04.2018
(51) Int. Cl.: H02J 3/32, H02J 3/00

(54) **ENERGY MANAGEMENT SYSTEM**
ENERGIEVERWALTUNGSSYSTEM
SYSTÈME DE GESTION D'ÉNERGIE

(30) Priority: 28.04.2017 GB 201706864; 26.01.2018 GB 201801278
(43) Date of publication of application: 04.03.2020
(73) Proprietor: Grid Edge Limited, Birmingham B4 7LR (GB)
(72) Inventor: ANDERSON, Thomas, Birmingham B4 7LR (GB); SCOTT, James, Birmingham B4 7LR (GB); WRIGHT, Daniel, Birmingham B4 7LR (GB)
(74) Representative: Greaves Brewster LLP
(86) International application number: PCT/GB2018/051108
(87) International publication number: WO 2018/197887

(56) References cited:
- EP-A1- 1 993 183
- WO-A1-2017/062896
- CN-A- 104 466 952
- GB-A- 2 487 781
- GB-A- 621 436
- US-A1- 2011 147 360
- US-A1- 2014 070 756
- US-A1- 2016 216 007

## Description

### Technical Field

This invention relates to a building energy management system to optimise costs for a user of energy and to assist suppliers of electric power better to regulate demand for electricity.

### Background Art

Existing building energy management systems are generally passive in the sense that they are computer-based systems that help to manage, control and monitor building technical services (HVAC, lighting etc.) and the energy consumption of devices used by the building. They provide the information and the tools that building system managers need both to understand the energy usage of their buildings and to control and improve their buildings' energy performance. These legacy systems do not use artificial intelligence automatically to control a system rather they provide a human manager with tools and information better to control the consumption of energy.

More recently limited artificial intelligence systems, such as that of BuildingIQ^{®}, continuously obtains data on the local weather forecast, the occupancy for the building, energy prices, tariffs and demand response signals. Based on those inputs, such systems run thousands of simulations to arrive at the most efficient operating strategy for the following 24 hours. They then communicate to the building management system to make changes to the building heating, cooling and ventilation to optimise their settings.

None of the prior art systems takes note of issues on the energy supply side. Energy generation systems tend to produce excess energy when demand is low and insufficient when demand is high; as a result, expensive stand-by power generation systems have to be brought on stream at short notice to meet the extra demand.

Excess supply is dealt with in part through electricity generating companies providing consumers with attractive tariffs to take power at times of lesser demand or excess energy supply.

There is a requirement therefore for energy management systems which can smooth demand over a period of time and minimise the need for stand-by generation capacity.

WO2017/062896 Al describes a relevant example of the prior art.

### Disclosure of Invention

The invention is defined by the appended claims. According to the present invention a method of managing energy in an energy consuming and storage system used for ventilating, heating and/or cooling a space, said system being connected to an electric supply comprises:
- measuring a parameter of the electricity supply;
- measuring over a period of time the energy consumption against time of the system and storing the measurements taken;
- measuring over a period of time the energy stored against time in the system and storing the measurements taken;
- using the measurements of energy consumption and energy stored to derive a base net energy need for the system;
- using the base net energy need to demand energy from an electrical supply at times of predicted lower overall energy cost and storing the energy demanded to supply the system with energy at times of predicted higher overall energy cost;
- increasing the energy taken from the electric supply and storing it when the parameter of the supply is above a pre-set maximum indicating that there is more energy in the electric supply that can be consumed and reducing taking energy from the electric supply when the parameter of the supply falls below a pre-set minimum indicating high demand for electric energy.

The parameter is normally frequency but voltage may also be used.

In this invention "overall energy cost" means the total cost incurred by a system in a site over a predetermined period. The predetermined period may be a relative short time of hours or a longer period of days depending on the nature of the storage systems used on the site concerned.

### Brief Description of Drawings

Figure 1 is a schematic illustration of an example control system for a building using the method of the present invention;
Figure 2 is a schematic diagram of an air cooling asset; and
Figures 3A to 3E illustrate the use of various energy management methods, including that of the invention in figure 3D, on the cooling system of figure 2.

### Illustrative example of the invention

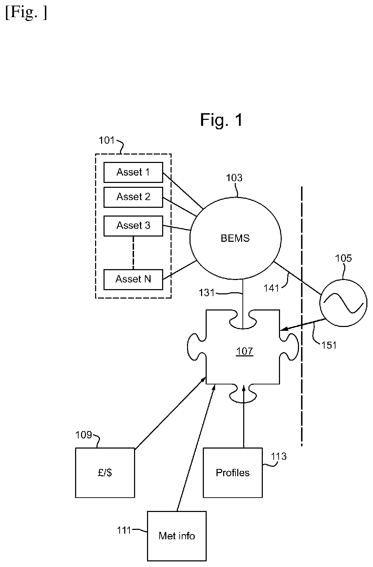

In figure 1, a building or group of buildings 101 contains a number of ventilation, heating and/or cooling devices Asset 1, Asset 2, Asset 3...Asset N. deployed in individual rooms or areas of the building or group of buildings 101. The Assets 1, 2, 3 ...N have the capability of storing energy either alone or collectively. The energy storage may, for example, be in in form of a heat sink, battery, fly-wheel, up-hill pumping device or other.

The ventilation, heating and/or cooling of the building or group of buildings 101 is controlled by a building energy management system 103 which switches on and off the Assets 1, 2, 3...N and causes them to store energy. The Assets 1, 2, 3...N draw power 141 from the grid 105; the power draw-down for each is controlled by the building energy management system 103 using Ethernet or Wi-Fi connections (the individual power connections to each asset are omitted for clarity).

A broadband connection 131 links the building energy management system 103 to a server or servers 107 which may be remote from or collocated with the building or group of buildings 101. The server provides an artificial neural network to generate predictive information over time 115 concerning energy requirements based on known consumption patterns of the Assets 1, 2, 3...N obtained from those assets through the building energy management system 103. This information is stored as a profile 113 in respect of each Asset 1,2,3...N for individual days of the week to reflect usage patterns, which may vary from one day to another. Predicted and spot energy cost information 109 is obtained from the electricity supplier and fed to the cost model for the assets. Meteorological information 111, particularly temperature and humidity predictions for the immediate future in the locality of the building or group of buildings 101, is downloaded to the server(s) 107.

The neural network on the server 107 is a regression-based predictive learning programme which continually updates the profiles 113 based on experience, in this way the profiles become "smarter" or more reflective of reality as time passes.

By combining the meteorological information 111 with the asset profiles 113, it is possible to gain a prediction on an hour by hour / minute by minute basis of the forthcoming energy needs of the assets. By combining this with the cost information 109, it is possible to predict costs and programme to Building Energy Management system to prepare an energy draw-down profile to draw power from the grid 105 when the energy costs are at their lowest and cause the Assets 1, 2, 3...N to store enough excess energy for use when energy cost are high so that the Assets 1, 2, 3...N do not have to draw energy from the grid 105 at times of predicted higher costs.

However, the embodiment shown in figure 1 goes further than this. Through the link 151, the neural network on the server 107 identifies when there is excess power in the grid 105 because the frequency of the grid increases, say, by 1% above the nominal frequency (50Hz in the UK). At that point the server 107 switches the building energy management system to cause the Assets 1, 2, 3...N to take and store energy up to a pre-set maximum. If that draw down, plus what would be drawn down following the energy profile at a particular time would take takes the asset concerned above its available capacity, preference is given to drawing down excess energy off the grid (rather than following the pre-set profile) so that the management system always guarantees to the electricity supplier the availability of capacity to absorb excess energy up to an agreed maximum. The ability to absorb excess energy up to a maximum can be agreed with the energy supplier on a time basis, so that the capacity described is only available to the grid at certain times of day or week..

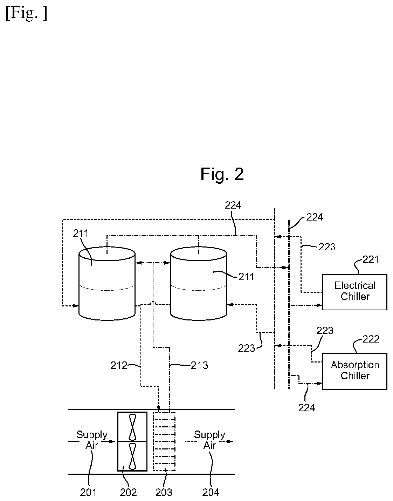

Figure 2 show a schematic diagram of a cooling unit, which may be one of the assets to which the system of figure 1 was applied.

The unit comprises a duct 201 in which fans 202 are mounted driving air from a closed space, such as a room, through a heat exchanger 203 to a chiller. Warm air from the chiller passes through the heat exchanger 203 giving up heat to a fluid passing through the heat exchanger from a cold duct 212 from the bases of fluid storage tanks 211 to a duct 213 which takes the warmed fluid to the top of the fluid storage tanks. Warmed fluid is taken from the tops of the tanks 211 through warm fluid ducts 224 to an electric chiller 221 or an absorption chiller 222. In the chillers the fluid is cooled and passed back to the bottom of the tanks 211 through cool fluid ducts 223.

In both the electric chiller 221 and the absorption chiller 222 energy is consumed in the pumping process within the chillers.

The use of the tanks 211 gives the unit considerable storage capacity for cooled fluid. Thus by allowing the chillers 221 or 222 to cool more fluid than is needed for immediate use in the heat exchanger 203, a store of cooled fluid is built up for later use. In a sense the tanks 211 act as energy batteries in the system. By running the chillers at times of low energy cost and storing the cooled fluid for later use, considerable costs savings can be achieved over a system in which the chillers are run to meet immediate demand from the heat exchanger 203.

In simple known systems the heat exchanger 203 would be connected directly to the chillers 221 or 222, without the tanks 211. In this case the maximum demand on the chillers would occur at times of the day when external temperatures were at their highest and, probably, when similar equipment elsewhere is demanding energy resources leading to a shortage of supply in the electricity grid.

By employing the present invention, energy can be taken from the grid at times of low cost and/or excess supply, and not taken when there is a supply shortfall and/or when cost is high.

To heat, rather than to cool, the flows in lines 212, 213, 223, 224 are reversed with the chillers acting as fluid heaters.

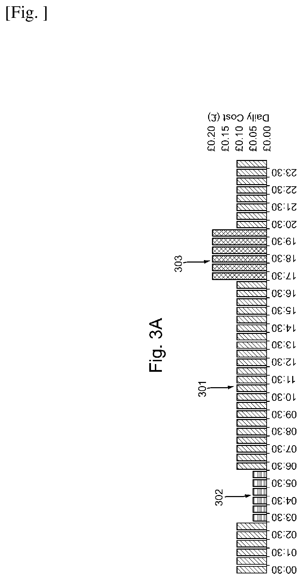

Figures 3A to 3E illustrate the beneficial impact of the energy management system of the invention applied to an asset illustrated in figure 2.

In figure 3A, a typical pricing structure for the supply of electricity to commercial premises is shown. Between 06 30 and 17 30 and again between 20 30 and 03 30 a standard tariff applies 301. Between 03 30 and 06 30 the price 302 is low, about half the standard tariff, reflecting low demand at this time. Between 17 30 and 20 30 the price is high 303, reflecting high demand for electric energy at this time.

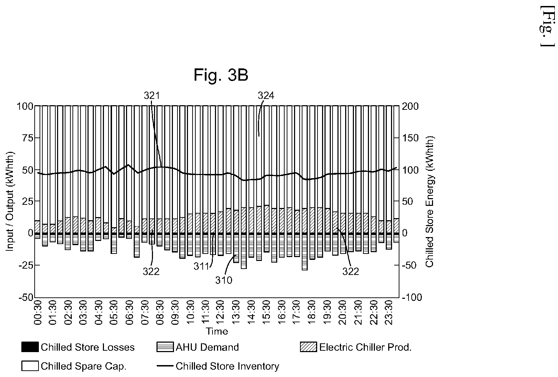

Figure 3B shows the energy demands of the asset of figure 2 bars 310 and the energy losses from the asset bars 311, primarily as a result of fluid storage in the tanks. The asset of figure 2 in this mode is operating with a conventional building energy management system which controls energy provision to the assets based on previous patterns of requirements, meteorological information, i.e. predictions of the outside temperature. Thus the system tends to draw energy from the grid to meet short term predictions and needs. The electrical energy taken from the grid at any time is shown by bars 322, with line 321 showing the stored energy (in the case of the asset in figure 2); this is in the form of chilled fluid in tanks 211. By matching energy consumed with energy demanded the system maintains the energy store in the tanks at about 50% of capacity, the stored energy is represent by line 324. It can be seen that the system has about 50% redundancy in its energy storage capacity, but the system is also taking considerable amounts of energy from the grid at the peak period between 17 30 and 20 30.

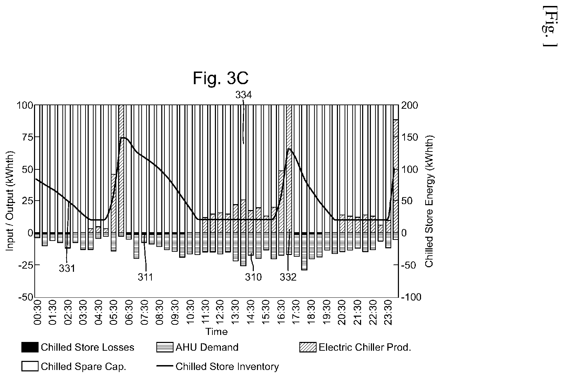

Figure 3C shows the same system, but now using energy price information. In this model the system draws energy up to its total capacity, when the price is lowest but taking account of predicted future demands. The pattern of energy consumption 310 in this model is the same as that of the model control by an existing standard building energy management system, The asset prioritises taking energy from the grid between 03 30 and 06 30 when the tariff is lowest, storing that energy in the tanks 211 as cooled fluid and not taking further energy from the system until the sored energy has reduced to about 10% of stored energy capacity about 11 30; as the tariff at that time is the standard tariff it draws sufficient energy to maintain the store at 10% of capacity, but does not draw any excess for the time being. For the exemplified asset, a time of high demand is between 17 30 and 20 30 exactly when the electricity supply tariff is at its highest. To avoid paying the highest tariff, the system anticipates the high demand and stores sufficient energy to meet that demand between 16 30 and 17 30 when the standard tariff applies (the standard tariff being approximately half the peak tariff). The energy stored in the system is shown by line 331, which can be seen to be rising to a peak after energy is drawn from the grid for storage purposes when power is relatively cheaper and dropping as energy is taken from the tanks 211 and used during periods when energy is relatively more expensive. As can be seen line 331 drops to 10% of capacity when storage is simply matching demand. As the energy storage pattern has changed from that in figure 3B, the pattern of energy losses from the asset represented by line 311 changes. The losses are higher than those in figure 3B immediately after energy recharging but lower when energy storage is reduced to 10% of capacity. Overall the total losses are reduced by 44% from the previous value and running costs reduced by 17.6% compared with the conventional building energy management system of figure 3B.

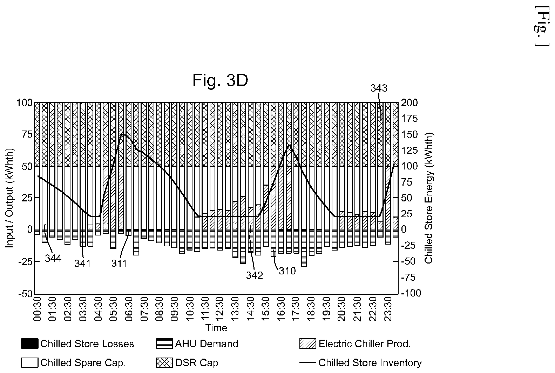

Because electricity generating companies have a requirement for take up of excess energy generated or to cut off supplies for a short time when energy demand is exceeding generation capacity, the companies have tariffs under which they will pay to have the excess energy taken. In Figure 3D, the system is organised not to demand more than 50% of the input capacity at any one time, with the remaining 50% of capacity made available to the energy in the grid. This is controlled by monitoring the frequency of the grid as described with reference to figure 1 and allowing power to flow to the until and to be stored in the tanks 211 up to the available capacity for a short time. The monitoring system also identifies a shortfall of generation capacity on the grid, by a drop in frequency on the grid. The system stops the asset taking power. This latter capability will become even more important as electricity supply companies increasingly move to the spot pricing of major commercial consumers, where the price relates the actual demand at any time.

Figure 3D illustrates the effect of use of an energy management system as described in figure 1 in connection with an energy consuming asset shown in figure 2. In figure 3D the energy management system limits the power take of the asset represented by bars 342 to 50% of capacity, the other 50% shown by bars 343 being available to the grid for off-load of excess power. The output of the asset at any time represented by bars 310 is unchanged, but the rate of replenishment of energy stored in tanks 211 (figure 2) is spread over longer periods. But as these periods are at time when energy costs are below the peak costs there is no difference from the model of figure 3C for the costs for total energy supplied. However, as there now is capacity for the grid to off-load excess energy up to a total capacity of 50% of the asset, there is additional payment from the energy company for this facility. Furthermore the asset has resilience to withstand withdrawal of supplies for short periods when demands on the grid are high, and this can be done when the frequency in the grid is detected to have dropped below a present level, say 1% below the nominal frequency (50Hz in the UK).

In figure 3D the losses in the system are shown by bars 311, these are a bit higher than the model in figure 3C, but still significantly below the model of figure 3B however the cost savings to a consumer over the standard building energy model of figure 3B.

Table 1 below illustrated the impact of the models of figures 3B, 3C and 3D.

**[Table 0001]**

| **Table 1** | | | |
|---|---|---|---|
| Input/output capacity 100 Kwh | Conventional prior art building energy management - Figure 3B | Price sensitive building energy management - Figure 3C | Building energy management according to the invention - Figure 3D |
| Power usage Kwh | 504.01 | 488.34 | 492.18 |
| Losses Kwh | 70.65 | 39.30 | 47.0 |
| Reduction in losses | | 44% | 33% |
| Cost/ day £ | 61.20 | 50.41 | 19.58 |
| Savings over figure 3B | | 10.79(17.6%) | 41.62(68.0%) |

It can be seen that savings achievable using the present invention are considerable.

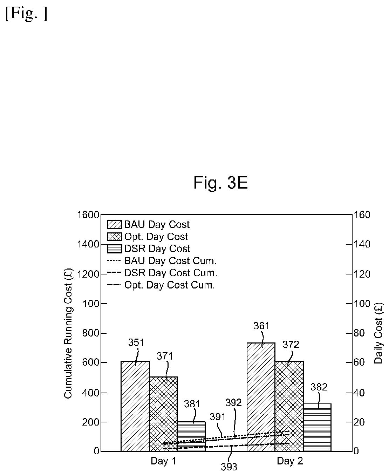

Figure 3E shows the costs on two separate successive summer days. Day 1 is the day one which the examples 3B 3C and 3D were drawn up. Day 2 is the following day which was warmer. As a result of the warmer weather, more energy was consumed on day two, but the relative costs savings from the prior art building management system bars 351 (Day 1) and 361 (Day 2) show the costs using conventional building management controls, Bars 371 and 372 show the costs on Day 1 and Day2 managing according to energy costs, and Bars 381 and 382 show the costs on Day1 and Day 2 using a building energy management system in accordance with the invention. Line 391 shows the cumulating costs over Days 1 and 2 using a conventional building management system, line 392 the same but using a building management system controlling on the basis of costs and line 393 the cumulating costs over Days 1 and 2 using a building management system according to the present invention.

Although the building asset described by way of an example for a space cooling and warming system, the principles can be applied to any heating, cooling or heating asset in a building, and indeed machinery and other powered devices provided they have an energy store associated with them. Although the energy store described is a fluid tank, other energy stores such as batteries and flywheels can be used. The main criterion for such stores is that they have sufficient capacity to store and supply energy to the asset concerned during periods in which power may be interrupted.

In a further development of the system, the predicted demand information developed by the building energy control system can be exported to an energy supply company who can use the information to approach the building management to vary their predicted demands control system to meet an anticipated short-fall in power supply. Payment arrangements can be agreed between the power supplier and the building management which would represent a saving to the electricity supply company compared to the price that the company might have to pay on the spot market to cover for the short-fall.

In the illustrative example, frequency is the parameter of the electricity supply used to determine excess energy in the supply or a shortfall. However measurements of voltage in in the supply may also be used as an alternative..

## Claims

1. A method of managing energy in an energy consuming and storage system (101) used for ventilating, heating and/or cooling a space, said system being connected to an electricity supply (105), and said system comprises a ventilating, heating and/or cooling asset, the asset having a heat exchanger (203) and an energy store comprising one or more fluid storage tanks (211) in fluid communication with the heat exchanger, wherein the method comprises:
monitoring a parameter of the electricity supply;
measuring over a period of time the energy consumption against time of the system and storing the measurements taken;
measuring over a period of time the energy stored against time in the system and storing the measurements taken;
using the measurements of energy consumption and energy stored to derive a base net energy need for the system;
using the base net energy need to demand energy from the electricity supply at times of predicted lower overall energy cost and storing, in the one or more fluid storage tanks, the energy demanded to supply the system with energy at times of predicted higher overall energy cost; and
increasing the energy taken from the electricity supply and storing it in the one or more fluid storage tanks up to an agreed maximum when a parameter of the supply is above a pre-set maximum indicating that there is more energy in the electricity supply that can be consumed and reducing taking energy from the electricity supply when the parameter of the supply falls below a pre-set minimum indicating high demand for energy,
whereby the electricity supply is guaranteed storage capacity in the one or more fluid storage tanks up to the agreed maximum, the agreed maximum corresponding to a proportion of an input capacity of the one or more fluid storage tanks and a remaining proportion of the input capacity of the one or more fluid storage tanks being available to store the energy demanded from the electricity supply.

2. A method according to claim 1 wherein the asset is limited to receive a maximum of 50% of its input capacity though normal demands, the other 50% being available to the electricity supply to off-load excess power when the parameter measured by the system exceeds the pre-set maximum.

3. A method according to claim 2 wherein the parameter is frequency.

4. A method according to claim 3 in which the pre-set maximum is 1% above the nominal frequency of the electricity supply.

5. A method according to claim 3 or claim 4 in which the pre-set minimum is 1% below the nominal frequency of the electricity supply.

6. A method according to claim 2 in which the parameter is voltage.

7. A method according to claim 6 in which the pre-set maximum is 1% above the nominal voltage of the electricity supply.

8. A method according to claim 6 or claim 7 in which the pre-set minimum is 1% below the nominal voltage of the electricity supply.

9. The method according to any preceding claim,
whereby the electricity supply is guaranteed the storage capacity in the energy store of the asset up to the agreed maximum for one or more time periods of a day and/or week.

## Patentansprüche

1. Verfahren zur Verwaltung von Energie in einem Energieverbrauchs- und -speichersystem (101), das zum Belüften, Heizen und/oder Kühlen eines Raums verwendet wird, wobei das System an eine Stromversorgung (105) angeschlossen ist und das System eine Belüftungs-, Heiz- und/oder Kühlanlage umfasst, wobei die Anlage einen Wärmetauscher (203) und einen Energiespeicher umfassend einen oder mehrere Fluidspeichertanks (211) in Fluidkommunikation mit dem Wärmetauscher aufweist, wobei das Verfahren Folgendes umfasst:
Überwachen eines Parameters der Stromversorgung;
Messen, über einen Zeitraum, des Energieverbrauchs gegenüber Zeit des Systems und Speichern der vorgenommenen Messungen;
Messen, über einen Zeitraum, der gespeicherten Energie gegenüber Zeit in dem System und Speichern der vorgenommenen Messungen;
Verwenden der Messungen von Energieverbrauch und der gespeicherten Energie, um einen Basisnettoenergiebedarf für das System abzuleiten;
Verwenden des Basisnettoenergiebedarfs, um Energie aus der Stromversorgung zu Zeiten vorhergesagter niedrigerer Gesamtenergiekosten anzufordern, und Speichern, in dem einen oder den mehreren Fluidspeichertanks, der Energie, die angefordert wird, um das System mit Energie zu Zeiten vorhergesagter höherer Gesamtenergiekosten zu versorgen; und
Erhöhen der Energie, die aus der Stromversorgung entnommen wird, und deren Speichern in dem einen oder den mehreren Fluidspeichertanks bis zu einem vereinbarten Maximum, wenn ein Parameter der Versorgung oberhalb eines voreingestellten Maximums liegt, das angibt, dass mehr Energie in der Stromversorgung vorhanden ist, die verbraucht werden kann, und Reduzieren der Entnahme von Energie aus der Stromversorgung, wenn der Parameter der Versorgung unterhalb eines voreingestellten Minimums fällt, das einen hohen Energiebedarf angibt,
wodurch der Stromversorgung eine Speicherkapazität in dem einen oder den mehreren Fluidspeichertanks bis zu dem vereinbarten Maximum garantiert wird, wobei das vereinbarte Maximum einem Anteil einer Eingabekapazität des einen oder der mehreren Fluidspeichertanks entspricht und ein verbleibender Anteil der Eingabekapazität des einen oder der mehreren Fluidspeichertanks zur Verfügung steht, um die von der Stromversorgung angeforderte Energie zu speichern.

2. Verfahren nach Anspruch 1, wobei die Anlage darauf begrenzt ist, ein Maximum von 50 % ihrer Eingangskapazität durch normale Anforderungen entgegenzunehmen, wobei die anderen 50 % für die Stromversorgung zur Verfügung stehen, um überschüssige Leistung abzuladen, wenn der von dem System gemessene Parameter das voreingestellte Maximum überschreitet.

3. Verfahren nach Anspruch 2, wobei der Parameter eine Frequenz ist.

4. Verfahren nach Anspruch 3, bei dem das voreingestellte Maximum 1 % oberhalb der Nennfrequenz der Stromversorgung liegt.

5. Verfahren nach Anspruch 3 oder Anspruch 4, bei dem das voreingestellte Minimum 1 % unterhalb der Nennfrequenz der Stromversorgung liegt.

6. Verfahren nach Anspruch 2, bei dem der Parameter eine Spannung ist.

7. Verfahren nach Anspruch 6, bei dem das voreingestellte Maximum 1 % oberhalb der Nennspannung der Stromversorgung liegt.

8. Verfahren nach Anspruch 6 oder Anspruch 7, bei dem das voreingestellte Minimum 1 % unterhalb der Nennspannung der Stromversorgung liegt.

9. Verfahren nach einem vorhergehenden Anspruch, wodurch der Stromversorgung die Speicherkapazität in dem Energiespeicher der Anlage bis zu dem vereinbarten Maximum für einen oder mehrere Zeiträume eines Tages und/oder einer Woche garantiert wird.

## Revendications

1. Procédé de gestion d'énergie dans un système de consommation et de stockage d'énergie (101) utilisé pour ventiler, chauffer et/ou refroidir un espace, ledit système étant raccordé à une alimentation en électricité (105), et ledit système comprenant un actif de ventilation, de chauffage et/ou de refroidissement, l'actif comportant un échangeur de chaleur (203) et un accumulateur d'énergie comprenant un ou plusieurs réservoirs de stockage de fluide (211) en communication fluidique avec l'échangeur de chaleur, ledit procédé comprenant :
la surveillance d'un paramètre de l'alimentation en électricité ;
la mesure sur une période de temps de la consommation d'énergie en fonction du temps du système et le stockage des mesures prises ;
la mesure sur une période de temps de l'énergie accumulée en fonction du temps dans le système et le stockage des mesures prises ;
l'utilisation des mesures de consommation d'énergie et de l'énergie accumulée pour dériver un besoin net d'énergie de base pour le système ;
l'utilisation du besoin net d'énergie de base pour demander de l'énergie provenant de l'alimentation en électricité à des moments où le coût global de l'énergie est prévu plus bas et le stockage, dans lesdits un ou plusieurs réservoirs de stockage de fluide, de l'énergie demandée pour alimenter le système en énergie à des moments où le coût global de l'énergie est prévu plus élevé ; et
l'augmentation de l'énergie prise de l'alimentation en électricité et son stockage dans lesdits un ou plusieurs réservoirs de stockage de fluide jusqu'à un maximum convenu lorsqu'un paramètre de l'alimentation est supérieur à un maximum prédéfini indiquant qu'il y a plus d'énergie dans l'alimentation en électricité qui peut être consommée et la réduction de l'énergie prise de l'alimentation en électricité lorsque le paramètre de l'alimentation tombe en dessous d'un minimum prédéfini indiquant une forte demande d'énergie,
moyennant quoi l'alimentation en électricité est une capacité de stockage garantie dans lesdits un ou plusieurs réservoirs de stockage de fluide jusqu'au maximum convenu, le maximum convenu correspondant à une proportion d'une capacité d'entrée desdits un ou plusieurs réservoirs de stockage de fluide et une proportion restante de la capacité d'entrée desdits un ou plusieurs réservoirs de stockage de fluide étant disponible pour accumuler l'énergie demandée à partir de l'alimentation en électricité.

2. Procédé selon la revendication 1, ledit actif étant limité pour recevoir un maximum de 50 % de sa capacité d'entrée en cas de demandes normales, les 50 % restants étant disponibles pour l'alimentation en électricité afin de décharger l'énergie excédentaire lorsque le paramètre mesuré par le système dépasse le maximum prédéfini.

3. Procédé selon la revendication 2, ledit paramètre étant la fréquence.

4. Procédé selon la revendication 3, ledit maximum prédéfini étant de 1 % au-dessus de la fréquence nominale de l'alimentation en électricité.

5. Procédé selon la revendication 3 ou la revendication 4, ledit minimum prédéfini étant de 1 % en dessous de la fréquence nominale de l'alimentation en électricité.

6. Procédé selon la revendication 2, ledit paramètre étant la tension.

7. Procédé selon la revendication 6, ledit maximum prédéfini étant de 1 % au-dessus de la tension nominale de l'alimentation en électricité.

8. Procédé selon la revendication 6 ou la revendication 7, ledit minimum prédéfini étant de 1 % en dessous de la tension nominale de l'alimentation en électricité.

9. Procédé selon l'une quelconque des revendications précédentes, grâce à l'alimentation en électricité est garantie la capacité de stockage dans l'accumulateur d'énergie de l'actif jusqu'au maximum convenu pendant une ou plusieurs périodes d'une journée et/ou d'une semaine.
